# EUROPEAN PATENT APPLICATION

(11) **EP 4 704 157 A1**
(43) Date of publication of application: **04.03.2026**
(21) Application number: 24796617.9
(22) Date of filing: 13.03.2024
(51) Int. Cl.: H01M 4/02, H01M 4/04, H01M 4/13, H01M 10/058

(54) **ELECTRODE AND BATTERY**

(30) Priority: 28.04.2023 JP 2023075295
(71) Applicant: Vehicle Energy Japan Inc., Hitachinaka-shi, Ibaraki 312-8505 (JP)
(72) Inventor: KUROKI Yasutaka, Hitachinaka-shi, Ibaraki 312-8505 (JP)
(74) Representative: Strehl & Partner mbB
(86) International application number: PCT/JP2024/009797
(87) International publication number: WO 2024/224859

(57) **Abstract**

Provided is an electrode (positive electrode 100) that includes a current collecting layer (positive electrode current collecting layer 110), an active material layer (positive electrode active material layer 120), and an insulating layer (130). The active material layer (positive electrode active material layer 120) contains an active material (positive electrode active material 121) and is stacked on and bonded to the current collecting layer (positive electrode current collecting layer 110). The insulating layer (130) contains an insulating material (131) having insulating properties, and is stacked on and bonded to the active material layer (positive electrode active material layer 120). The average particle diameter (D50) of the insulating material (131) is 0.5 µm or more to 5.0 µm. The insulating layer (130) has a porosity of 25% or more but 70% or less. The insulating layer (130) and the active material layer (positive electrode active material layer 120) overlap with each other by 0.001% or more but 30% or less in a stacking direction Z.

## Description

### Technical Field

The present invention relates to an electrode and a battery.

### Background Art

Conventionally, there has been known a technology that is related to an electrode in which an insulating layer coats and is bonded to an active material layer bonded to a current collecting layer (refer, for example, to Patent Document 1).

### Prior Art Document

### Patent Document

Patent Document 1: JP-2020-061226-A

### Summary of the Invention

### Problem to be Solved by the Invention

It is demanded that an increase in the internal resistance of a battery be suppressed.

### Means for Solving the Problem

An electrode provided by the present invention includes a current collecting layer, an active material layer, and an insulating layer. The active material layer contains an active material and is stacked on and bonded to the current collecting layer. The insulating layer contains an insulating material and is stacked on and bonded to the active material layer. The insulating material has an average particle diameter of 0.5 µm or greater and 5.0 µm or less. The insulating layer has a porosity of 25% or more but 70% or less. The insulating layer and the active material layer overlap with each other by 0.001% or more but 30% or less in a stacking direction.

A battery provided by the present invention includes a positive electrode, a negative electrode, and an insulator disposed between the positive electrode and the negative electrode. At least one of the positive electrode and the negative electrode is the above-mentioned electrode provided by the present invention.

### Advantages of the Invention

It is possible to obtain an electrode in which an increase in internal resistance is suppressed and a battery including such an electrode.

### Brief Description of the Drawings

FIG. 1 is a perspective view illustrating a battery 1 according to a first embodiment.
FIG. 2 is a perspective view illustrating a charge/discharge body 10 of the battery 1.
FIG. 3 is a cross-sectional view illustrating the charge/discharge body 10 taken along line 3A-3B in FIG. 2.
FIG. 4 is a cross-sectional view illustrating the charge/discharge body 10 in a region 4 in FIG. 3.
FIG. 5 is a side view schematically illustrating a method for manufacturing a positive electrode 100.
FIG. 6 is a top view schematically illustrating the state in which a positive electrode current collecting layer 110 depicted in FIG. 5 is coated with slurry.

### Modes for Carrying Out the Invention

Embodiments for implementing the present invention will now be described with reference to the accompanying drawings. The sizes and proportions of component elements may be exaggerated in the accompanying drawings in order to facilitate the understanding of the embodiments. In a cross-sectional view of an active material layer, for example, adjacent active materials are illustrated as if they were not in contact, for the purpose of illustrating a binder and an additive around the active materials. In the accompanying drawings, the same component elements are designated by the same reference characters. A transverse direction X of a positive electrode 100, a negative electrode 200, and a separator 300 in a stacked state is indicated by an arrow X. A longitudinal direction Y of the positive electrode 100, the negative electrode 200, and the separator 300 in a stacked state is indicated by an arrow Y. A stacking direction Z of the positive electrode 100, the negative electrode 200, and the separator 300 in a stacked state is indicated by an arrow Z.

The electrode according to the embodiments of the present invention is described as a positive electrode. The electrode according to the embodiments of the present invention also includes a negative electrode. A battery 1 according to the embodiments of the present invention is described as a rectangular parallelepiped battery. The battery 1 according to the embodiments of the present invention also includes a cylindrical battery.

### (Configuration of Battery 1 including Positive Electrode 100 according to First Embodiment)

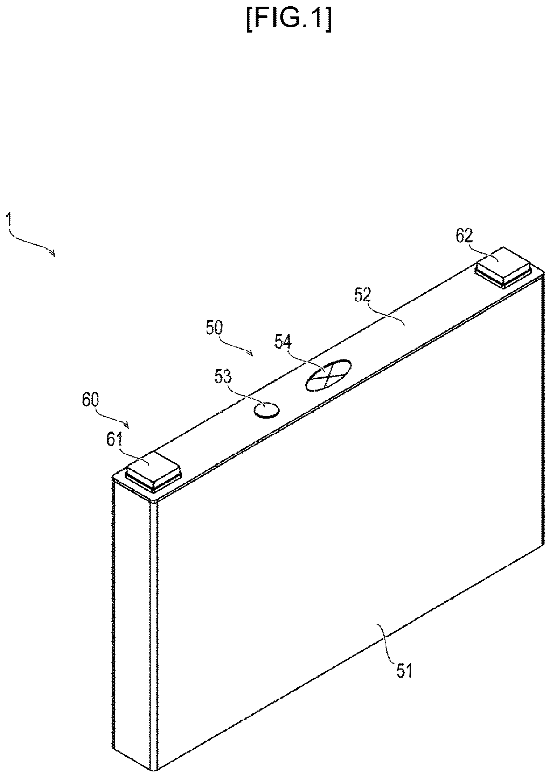

A configuration of the battery 1 including the positive electrode 100 according to a first embodiment will now be described with reference to FIGS. 1 through 4.

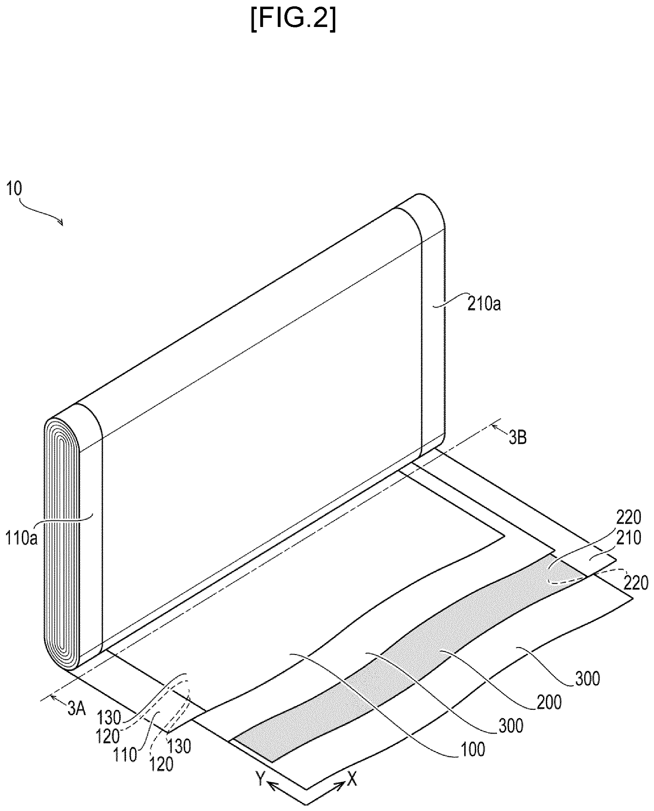

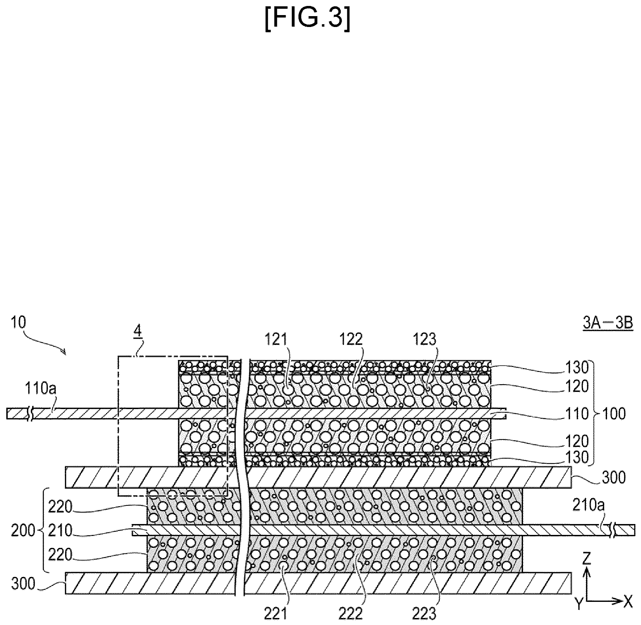

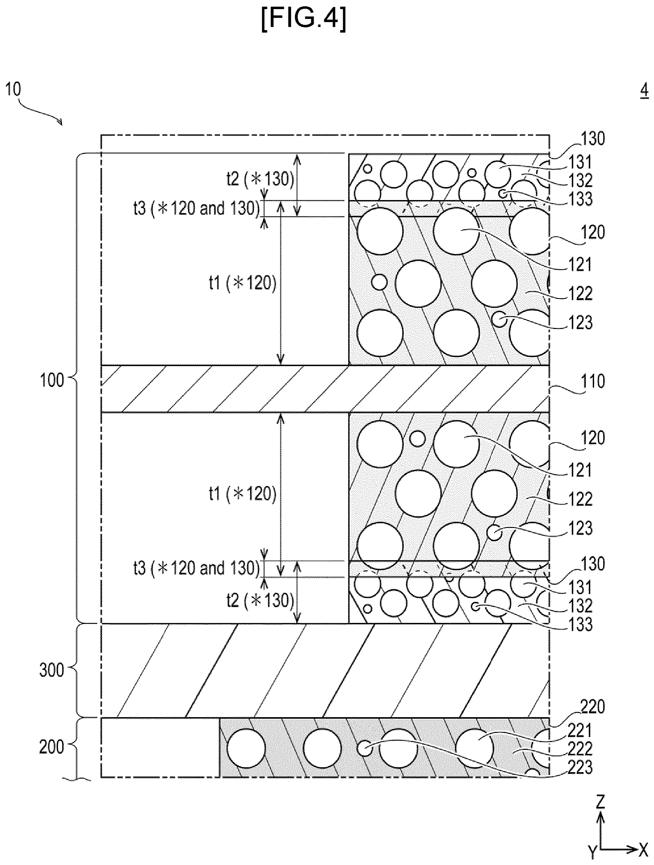

FIG. 1 is a perspective view illustrating the battery 1 according to the first embodiment. FIG. 2 is a perspective view illustrating a charge/discharge body 10 of the battery 1. FIG. 3 is a cross-sectional view illustrating the charge/discharge body 10 taken along line 3A-3B in FIG. 2. FIG. 4 is a cross-sectional view illustrating the charge/discharge body 10 in a region 4 in FIG. 3.

The battery 1 is, for example, a lithium-ion secondary battery. As depicted in FIGS. 1 through 4, the battery 1 includes the charge/discharge body 10, an exterior body 50, and an external terminal 60. Main component elements included in the battery 1 will be described below.

The charge/discharge body 10 is to be charged and discharged. The charge/discharge body 10 depicted in FIGS. 2 and 3 includes the positive electrode 100, the negative electrode 200, the separator 300, and an electrolyte (what is generally called an electrolytic solution). The charge/discharge body 10 is formed, for example, by stacking the positive electrode 100, the negative electrode 200, and two separators 300 in the order of the positive electrode 100, the separator 300, the negative electrode 200, and the separator 300 and winding them into a rectangular parallelepiped shape. The charge/discharge body 10 is configured such that electrolyte permeates particularly into the separator 300. The charge/discharge body 10 is covered with an insulating sheet in a state in which a positive electrode current collecting plate and a negative electrode current collecting plate are bonded together.

As depicted in FIG. 3, the positive electrode 100 (electrode) includes a positive electrode current collecting layer 110, positive electrode active material layers 120, and insulating layers 130.

The positive electrode current collecting layer 110 (current collecting layer) is formed, for example, in an elongated shape. That is, the positive electrode current collecting layer 110 is in foil form. At one end of the positive electrode current collecting layer 110 in the transverse direction X, a positive electrode current collecting section 110a is provided in the longitudinal direction Y. The positive electrode current collecting layer 110 is formed, for example, by aluminum or an aluminum alloy. For the positive electrode current collecting layer 110, for example, A3003 defined by JIS standard is used. A3003 is of a non-heat-treated type, and is an Al-Mn-based alloy. The thickness of the positive electrode current collecting layer 110 in the stacking direction Z is, for example, 10 µm. The thickness of the positive electrode current collecting layer 110 is selected, for example, within the range of 5 to 30 µm.

The positive electrode active material layers 120 (active material layers) are disposed on the positive electrode current collecting layer 110. The positive electrode active material layers 120 are stacked on and bonded to both sides of the positive electrode current collecting layer 110, and face each other in the stacking direction Z. The thickness of the positive electrode active material layers 120 in the stacking direction Z is, for example, 30 or 40 µm. The thickness of the positive electrode active material layers 120 is selected, for example, within the range of 10 to 200 µm.

The positive electrode active material layers 120 contain positive electrode active materials 121, a positive electrode binder 122, and a positive electrode conductive auxiliary agent 123.

For the positive electrode active materials 121 (active materials), for example, a lithium-containing composite oxide is used. The lithium-containing composite oxide is, for example, a metal element, such as nickel (Ni), cobalt (Co), or manganese (Mn), and lithium (Li). The positive electrode active materials 121 are formed into particles. The average particle diameter (D50) of the positive electrode active materials 121 is, for example, 25 µm. The average particle diameter (D50) of the positive electrode active materials 121 is selected, for example, within the range of 1 to 50 µm.

The positive electrode binder 122 bonds the positive electrode active materials 121 together. For example, polyvinylidene fluoride (PVdF), polytetrafluoroethylene (PTFE), polyethylene (PE), polystyrene, polybutadiene, polyacrylonitrile, polyvinyl fluoride, polyfluorinated propylene, polyfluorinated chloroprene, butyl rubber, nitrile rubber, styrene butadiene rubber (SBR), polysulfide rubber, nitrocellulose, cyanoethyl cellulose, various latexes, acrylic resin, or mixtures thereof are used for the positive electrode binder 122.

The positive electrode conductive auxiliary agent 123 improves the characteristics of the positive electrode 100. The positive electrode conductive auxiliary agent 123 is mixed with the positive electrode active materials 121 and arranged to increase the electrical conductivity between the positive electrode current collecting layer 110 and the positive electrode active materials 121. That is, the positive electrode conductive auxiliary agent 123 reserves a conductive path between the positive electrode current collecting layer 110 and the positive electrode active materials 121 in the positive electrode 100. For example, a carbon-based material is used for the positive electrode conductive auxiliary agent 123. The carbon-based material is, for example, crystalline carbon, amorphous carbon, or a mixture thereof. The crystalline carbon is, for example, artificial graphite, natural graphite, or a mixture thereof. The natural graphite is, for example, flake graphite, lump graphite, or earthy graphite. The amorphous carbon is, for example, carbon black. The carbon black is, for example, acetylene black, ketjen black, channel black, furnace black, lamp black, thermal black, or a mixture thereof.

As depicted in FIG. 4, the insulating layers 130 are stacked on and bonded to the positive electrode active material layers 120. The insulating layers 130 have a porosity of 25% or more but 70% or less. The porosity corresponds to the electrolyte retention rate. The insulating layers 130 overlap with the positive electrode active material layers 120 by 0.001% or more but 30% or less in the stacking direction Z. The expression "0.001% or more but 30% or less" represents a volume ratio. The insulating layers 130 have a thickness of 1.0 µm or more but 10.0 µm or less in the stacking direction Z. As depicted in FIG. 4, the region of the insulating layers 130 having a thickness t2 in the stacking direction Z and the region of the positive electrode active material layers 120 having a thickness t1 in the stacking direction Z partially overlap in the region having a thickness t3 in the stacking direction Z. The insulating layers 130 inhibit foreign matter from entering the positive electrode 100.

As depicted in FIG. 4, the insulating layers 130 contain insulating materials 131, a binder 132, and an additive 133.

The insulating materials 131 are inorganic matter or organic matter. The insulating materials 131 are, for example, boehmite or alumina. The insulating materials 131 are formed into particles. The average particle diameter (D50) of the insulating materials 131 is 0.5 µm or more to 5.0 µm. The average particle diameter (D50) of the insulating materials 131 is, for example, 1.2 µm. The insulating materials 131 have insulating properties. It is preferable that the insulating materials 131 be heat resistant. The proportion of the insulating materials 131 in the insulating layers 130 is, for example, 98%.

The binder 132 bonds the insulating materials 131 together. For example, polyvinylidene fluoride (PVdF), polytetrafluoroethylene (PTFE), polyethylene (PE), polystyrene, polybutadiene, polyacrylonitrile, polyvinyl fluoride, polyfluorinated propylene, polyfluorinated chloroprene, butyl rubber, nitrile rubber, styrene butadiene rubber (SBR), polysulfide rubber, nitrocellulose, cyanoethyl cellulose, various latexes, acrylic resins, or mixtures thereof are used for the binder 132. The binder 132 is, for example, PVdF. The binder 132 has insulating properties. The proportion of the binder 132 in the insulating layers 130 is, for example, 1.9%.

The additive 133, for example, uniformly disperses the insulating materials 131 and the binder 132. The additive 133 is, for example, a dispersant. The dispersant is, for example, a carboxylic acid compound. The proportion of the additive 133 in the insulating layers 130 is, for example, 0.1%. The additive 133 is not essential for the insulating layers 130.

As depicted in FIG. 3, the negative electrode 200 includes a negative electrode current collecting layer 210 and negative electrode active material layers 220.

The negative electrode current collecting layer 210 is formed, for example, in an elongated shape. That is, the negative electrode current collecting layer 210 is in foil form. At one end of the negative electrode current collecting layer 210 in the transverse direction X, a negative electrode current collecting section 210a is provided in the longitudinal direction Y. The negative electrode current collecting section 210a of the negative electrode current collecting layer 210 faces the positive electrode current collecting section 110a of the positive electrode current collecting layer 110 in the transverse direction X. The negative electrode current collecting layer 210 is formed, for example, by copper or a copper alloy. The thickness of the negative electrode current collecting layer 210 in the stacking direction Z is, for example, 10 µm. The thickness of the negative electrode current collecting layer 210 is selected, for example, within the range of 5 to 30 µm.

The negative electrode active material layers 220 are disposed on the negative electrode current collecting layer 210. The negative electrode active material layers 220 are bonded to both sides of the negative electrode current collecting layer 210, and face each other in the stacking direction Z. The negative electrode active material layers 220 have a greater width in the transverse direction X than the positive electrode active material layers 120. In a state in which the negative electrode 200 faces the positive electrode 100 with the separator 300 interposed therebetween, both ends of the negative electrode active material layers 220 in the transverse direction X are located outside the both ends of the positive electrode active material layers 120 in the transverse direction X. The thickness of the negative electrode active material layers 220 in the stacking direction Z is, for example, 30 or 40 µm. The thickness of the negative electrode active material layers 220 is selected, for example, within the range of 10 to 200 µm.

The negative electrode active material layers 220 contain negative electrode active materials 221 and a negative electrode binder 222. The negative electrode active material layers 220 may contain a negative electrode conductive auxiliary agent 223.

For example, carbon is used for the negative electrode active materials 221. The carbon is, for example, graphite, non-graphitizable carbon (hard carbon), or easilygraphitizable carbon (soft carbon). The graphite is, for example, natural graphite or artificial graphite. The natural graphite is, for example, flake graphite, lump graphite, or earthy graphite. The negative electrode active materials 221 are formed into particles. The average particle diameter (D50) of the negative electrode active materials 221 is, for example, 25 µm. The average particle diameter (D50) of the negative electrode active materials 221 is selected, for example, within the range of 1 to 50 µm.

The negative electrode binder 222 bonds the negative electrode active materials 221 together. The materials used for the negative electrode binder 222 are the same as those for the positive electrode binder 122, for example.

The negative electrode conductive auxiliary agent 223 improves the characteristics of the negative electrode 200. The negative electrode conductive auxiliary agent 223 is mixed with the negative electrode active materials 221 and disposed to enhance the electrical conductivity between the negative electrode current collecting layer 210 and the negative electrode active materials 221. That is, in the negative electrode 200, the negative electrode conductive auxiliary agent 223 reserves a conductive path between the negative electrode current collecting layer 210 and the negative electrode active materials 221.

The negative electrode 200 may include an insulating layer that covers the negative electrode active material layers 220. The insulating layer is heat resistant. The insulating layer contains, for example, an inorganic or organic material and a binder. The inorganic material is formed, for example, by alumina particles.

The separator 300 (insulator) provides insulation between the positive electrode 100 and the negative electrode 200. The insulating layers 130 of the positive electrode 100 face the negative electrode 200 in the stacking direction Z with the separator 300 interposed therebetween. Further, the separator 300 holds an electrolyte (what is generally called an electrolytic solution). The separator 300 is formed in an elongated shape. The separator 300 has a greater width in the transverse direction X than the negative electrode active material layers 220. In a state in which the positive electrode 100 and the negative electrode 200 face each other with the separator 300 interposed therebetween, both ends of the positive electrode active material layers 120 in the transverse direction X and both ends of the negative electrode active material layers 220 in the transverse direction X are located within a range in the transverse direction X of the separator 300. The thickness of the separator 300 in the stacking direction Z is, for example, 20 µm. The thickness of the separator 300 is selected, for example, within the range of 5 to 60 µm.

As depicted in FIG. 3, the separator 300 is formed by a porous material. For example, polyethylene, polypropylene, polyester, cellulose, or polyamide is used as the porous material. The separator 300 may be configured by stacking a plurality of different porous materials.

The separator 300 may include an insulating layer. The insulating layer is heat resistant. The insulating layer contains, for example, an inorganic or organic material and a binder. The inorganic material is formed, for example, by alumina particles.

The electrolyte allows lithium ions to flow between the positive electrode 100 and the negative electrode 200. The electrolyte is referred to also as an electrolytic solution.

The electrolyte contains an organic solvent and a lithium salt. The electrolyte may contain an additive.

For example, a carbonate ester, such as ethylene carbonate, may be used as the organic solvent. For example, lithium hexafluorophosphate (LiPF₆) is used as the lithium salt. For example, lithium hexafluorophosphate (LiPF₆) is used as the additive.

The exterior body 50 houses the charge/discharge body 10. As depicted in FIG. 1, the exterior body 50 includes a container 51, a lid 52, a liquid injection plug 53, and a cleavage valve 54. The container 51 is formed in a rectangular parallelepiped shape. The container 51 houses the charge/discharge body 10. The lid 52 is welded to the container 51. The lid 52 is provided with a liquid injection hole. The liquid injection hole is a hole for injecting the electrolyte (what is generally called the electrolytic solution) into the battery 1. The liquid injection plug 53 is attached to the liquid injection hole in the lid 52. The liquid injection plug 53 is inserted into the liquid injection hole and welded after the electrolyte is injected into the battery 1 through the liquid injection hole. The cleavage valve 54 is disposed on the lid 52. The cleavage valve 54 is formed integrally with the lid 52. The cleavage valve 54 cleaves toward the outside of the battery 1 when the internal pressure of the battery 1 exceeds a predetermined value.

The external terminal 60 relays the input and output of electric power between a current collector disposed inside the battery 1 and electric equipment disposed outside the battery 1. The electric equipment is, for example, a relay or an inverter disposed in a vehicle. Further, the external terminal 60 disposed on the battery 1 is electrically connected to the external terminal 60 disposed on another battery 1, for example, through a busbar in order to relay the input and output of electric power between the battery 1 and the other battery 1. As depicted in FIG. 1, the external terminal 60 includes a positive terminal 61 and a negative terminal 62. The positive terminal 61 is electrically connected to the positive electrode current collecting section 110a of the positive electrode current collecting layer 110 through the positive electrode current collecting plate. The positive terminal 61 is attached to the lid 52 via a positive electrode insulating material. The negative terminal 62 is electrically connected to the negative electrode current collecting section 210a of the negative electrode current collecting layer 210 through the negative electrode current collecting plate. The negative terminal 62 is attached to the lid 52 via a negative electrode insulating material.

### (Method for Manufacturing Positive Electrode 100 according to First Embodiment)

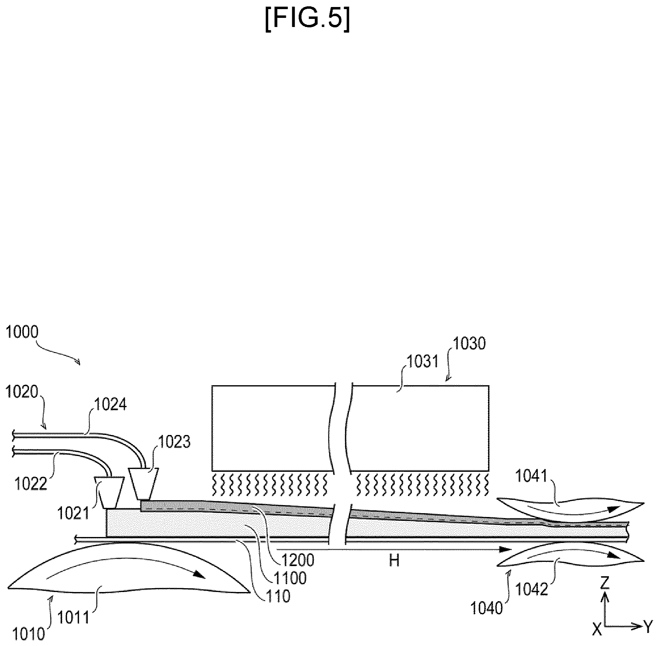

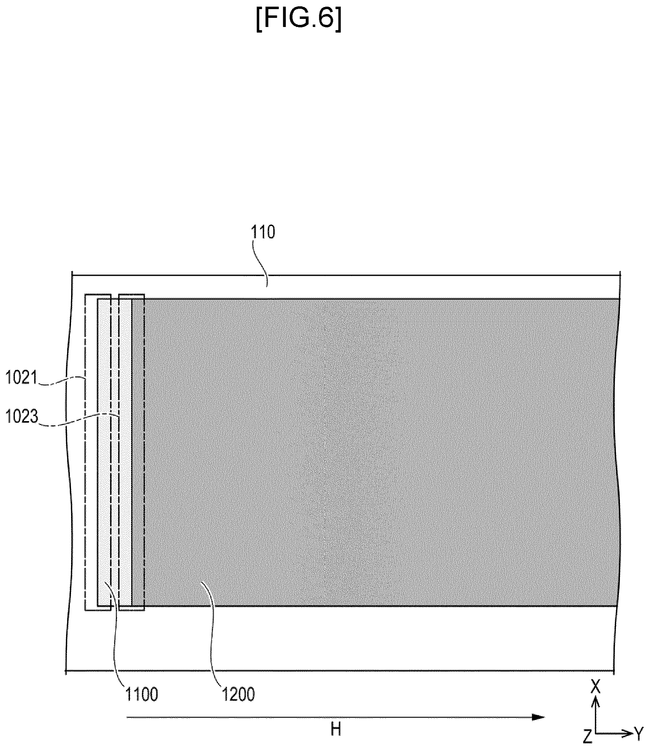

A method for manufacturing the positive electrode 100 will now be described with reference to FIGS. 5 and 6. FIG. 5 is a side view schematically illustrating the method for manufacturing the positive electrode 100. FIG. 6 is a top view schematically illustrating the state in which the positive electrode current collecting layer 110 depicted in FIG. 5 is coated with slurry.

In the method for manufacturing the positive electrode 100, a coating process involves coating with a positive electrode active material layer slurry 1100 and an insulating layer slurry 1200. In the coating process, the positive electrode current collecting layer 110 is coated with the positive electrode active material layer slurry 1100. Further, in the coating process, the positive electrode active material layer slurry 1100 is coated with the insulating layer slurry 1200.

The positive electrode active material layer slurry 1100 used in the coating process contains a solvent in addition to the constituent elements of the positive electrode active material layers 120. The positive electrode active materials 121, the positive electrode binder 122, and the positive electrode conductive auxiliary agent 123 are included as the constituent elements of the positive electrode active material layers 120. The solvent disperses the constituent elements of the positive electrode active material layers 120. As the solvent, for example, a solvent vaporable at a temperature equal to or higher than room temperature is used. The solvent is, for example, N-methyl-2-pyrrolidone (NMP).

The insulating layer slurry 1200 used in the coating process contains a solvent in addition to the constituent elements of the insulating layers 130. The solvent disperses, for example, the insulating materials 131 and the binder 132, which are contained in the insulating layers 130. As the solvent, for example, a solvent vaporable at a temperature equal to or higher than room temperature is used. The solvent is, for example, N-methyl-2-pyrrolidone

(NMP).

As depicted in FIG. 5, a manufacturing apparatus 1000 used for the positive electrode 100 includes a transport section 1010, a coating section 1020, a drying section 1030, and a rolling section 1040.

As depicted in FIG. 5, the transport section 1010 transports the constituent elements of the positive electrode 100. The transport section 1010 includes a transport roller 1011.

The transport section 1010 transports the positive electrode current collecting layer 110 which is wound around an unillustrated first roller to the coating section 1020, the drying section 1030, and the rolling section 1040, for example, through the transport roller 1011. The transport section 1010 winds the positive electrode current collecting layer 110 to which the positive electrode active material layers 120 and the insulating layers 130 are bonded, around an unillustrated second roller. When the second roller on which the positive electrode current collecting layer 110 is placed rotates, the transport roller 1011 and the first roller which are in contact with the positive electrode current collecting layer 110 also rotate to transport the positive electrode current collecting layer 110. A transport direction H of the positive electrode current collecting layer 110 corresponds to a longitudinal direction

Y of the positive electrode current collecting layer 110.

As depicted in FIG. 5, the coating section 1020 coats, for example, the positive electrode current collecting layer 110 with the slurry. The coating section 1020 includes a first coating head 1021, a first liquid supply pipe 1022, a second coating head 1023, and a second liquid supply pipe 1024.

As depicted in FIGS. 5 and 6, the first coating head 1021 is disposed in the transport direction H of the positive electrode current collecting layer 110, that is, in the transverse direction X perpendicular to the longitudinal direction Y of the positive electrode current collecting layer 110. An elongated opening is formed in the first coating head 1021. The elongated opening is connected to the first liquid supply pipe 1022. The positive electrode active material layer slurry 1100 is supplied from an unillustrated tank to the first coating head 1021 through an unillustrated pump and the first liquid supply pipe 1022. The first coating head 1021 faces the transport roller 1011 with the positive electrode current collecting layer 110 interposed therebetween. While the positive electrode current collecting layer 110 is being transported, the first coating head 1021 coats the positive electrode current collecting layer 110 with the positive electrode active material layer slurry 1100.

As depicted in FIGS. 5 and 6, the second coating head 1023 is disposed in the transverse direction X of the positive electrode current collecting layer 110. The second coating head 1023 and the first coating head 1021 are lined up in the transport direction H of the positive electrode current collecting layer 110. The second coating head 1023 is located downstream of the first coating head 1021 in the transport direction H of the positive electrode current collecting layer 110. An elongated opening is formed in the second coating head 1023. The elongated opening is connected to the second liquid supply pipe 1024. The insulating layer slurry 1200 is supplied to the second coating head 1023 from an unillustrated tank through an unillustrated pump and the second liquid supply pipe 1024. The second coating head 1023 faces the transport roller 1011 with the positive electrode current collecting layer 110 interposed therebetween. While the positive electrode current collecting layer 110 is being transported, the second coating head 1023 coats the positive electrode active material layer slurry 1100 with the insulating layer slurry 1200. That is, the insulating layer slurry 1200 is applied in such a manner as to cover the positive electrode active material layer slurry 1100. The insulating layer slurry 1200 may be applied to the positive electrode current collecting layer 110 in such a manner as to extend beyond an end of the positive electrode active material layer slurry 1100 in the transverse direction X and along the longitudinal direction Y of the positive electrode active material layer slurry.

As depicted in FIG. 5, the drying section 1030 dries the slurry. The drying section 1030 is disposed downstream of the coating section 1020 in the transport direction H of the positive electrode current collecting layer 110. The drying section 1030 includes a dryer 1031.

As depicted in FIG. 5, the dryer 1031 is disposed in the transport direction H of the positive electrode current collecting layer 110, that is, in the longitudinal direction Y of the positive electrode current collecting layer 110. While the positive electrode current collecting layer 110 is being transported, the dryer 1031 dries the positive electrode active material layer slurry 1100 and the insulating layer slurry 1200. The dryer 1031 includes a plurality of heat sources in the transport direction H of the positive electrode current collecting layer 110. The dryer 1031 uses the plurality of heat sources to dry the positive electrode active material layer slurry 1100 and the insulating layer slurry 1200 under a plurality of conditions.

In the drying section 1030, the positive electrode active material layer slurry 1100 forms the positive electrode active material layers 120 when the solvent evaporates. The positive electrode active material layer slurry 1100 dries when the NMP contained in the positive electrode active material layer slurry 1100 evaporates. Drying the positive electrode active material layer slurry 1100 reduces its thickness in the stacking direction Z. The positive electrode active material layers 120 are bonded to the positive electrode current collecting layer 110. The insulating layer slurry 1200 forms the insulating layers 130 when the solvent evaporates. The insulating layer slurry 1200 dries when the NMP contained in the insulating layer slurry 1200 evaporates. Drying the insulating layer slurry 1200 reduces its thickness in the stacking direction Z. The insulating layers 130 are bonded to the positive electrode active material layers 120.

As depicted in FIG. 5, the rolling section 1040 rolls the positive electrode current collecting layer 110, the positive electrode active material layers 120, and the insulating layers 130 in a state in which they are bonded together. The rolling section 1040 is disposed downstream of the drying section 1030 in the transport direction H of the positive electrode current collecting layer 110. The rolling section 1040 includes a rolling roller 1041 and a driven roller 1042.

As depicted in FIG. 5, the rolling roller 1041 is disposed in the transverse direction X of the positive electrode current collecting layer 110. The rolling roller 1041 faces the insulating layers 130 of the positive electrode 100. As depicted in FIG. 5, the driven roller 1042 is disposed in the transverse direction X of the positive electrode current collecting layer 110. The driven roller 1042 faces the rolling roller 1041 through the positive electrode 100. The driven roller 1042 faces the positive electrode current collecting layer 110 of the positive electrode 100. The rolling section 1040 is configured such that the thicknesses of the positive electrode active material layers 120 and the insulating layers 130 are determined by the distance between the rolling roller 1041 and the driven roller 1042.

The configuration described with reference to FIGS. 5 and 6 in conjunction with the method for manufacturing the positive electrode 100 is a configuration for bonding the positive electrode active material layers 120 and the insulating layers 130 to one side of the positive electrode current collecting layer 110. That is, the method for manufacturing the positive electrode 100 which is depicted in FIGS. 5 and 6 is the method for manufacturing what is generally called a single-side coated positive electrode 100. Meanwhile, as depicted in FIG. 3, the positive electrode 100 is configured such that, for example, the positive electrode active material layers 120 and the insulating layers 130 are bonded to both sides of the positive electrode current collecting layer 110. That is, the positive electrode 100 depicted in FIG. 3 is formed by what is generally called double-sided coating. Hence, the method for manufacturing the positive electrode 100 bonds the positive electrode active material layers 120 and the insulating layers 130 to the other side of the positive electrode active material layers 120 after the configuration described with reference to FIGS. 5 and 6.

### (Results of Comparative Experiments of Positive Electrode 100 according to First Embodiment and Positive Electrode according to Comparative Example)

Results of comparative experiments of the positive electrode 100 according to the first embodiment and a positive electrode according to a comparative example will now be described with reference to Table 1.

**[Table 1]**

| | Embodiment | | Comparative example | | |
|---|---|---|---|---|---|
| | Condition 1 | Condition 2 | Condition 3 | Condition 4 | Condition 5 |
| Insulating material (131) | Boehmite | Boehmite | Boehmite | Boehmite | Boehmite |
| Average particle diameter (D50) of insulating material (131) | 1.2 µm | 1.2 µm | 1.2 µm | 1.2 µm | 1.2 µm |
| Proportion of insulating material (131) in insulating layer (130) | 98% | 98% | 99.5% | 90% | 98% |
| Binder (132) | PVdF | PVdF | PVdF | PVdF | PVdF |
| Proportion of binder (132) in insulating layer (130) | 1.9% | 1.9% | 0.4% | 9.9% | 1.9% |
| Additive (133) | Carboxylic acid compound | Carboxylic acid compound | Carboxylic acid compound | Carboxylic acid compound | Carboxylic acid compound |
| Proportion of additive (133) in insulating layer (130) | 0.1% | 0.1% | 0.1% | 0.1% | 0.1% |
| Solvent for insulating layer slurry (1200) | NMP | NMP | NMP | NMP | NMP |
| Proportion of solid content (131-133) in insulating layer slurry (1200) | 30% | 15% | 30% | 30% | 10% |
| Viscosity of insulating layer slurry (1200) | 325mPa·s | 100mPa·s | 100mPa·s | 800mPa·s or higher | 3mPa·s |
| State of bonding between positive electrode active material layer (120) and insulating layer (130) | Good | Good | Not good | Good | Not good |
| State of interface between positive electrode active material layer (120) and insulating layer (130) | Very good | Good | Good | Very good | Not good |
| Suppression of resistance increase | Good | Good | Good | Not good | Not good |

The insulating layers under conditions 1 and 2 correspond to the insulating layers 130 of the positive electrode 100 according to the first embodiment. Meanwhile, the insulating layers under conditions 3 and 4 correspond to the insulating layers of the positive electrode according to the comparative example.

Under condition 1, the proportion of the insulating materials 131 in the insulating layers 130 was set to 98%. Further, the proportion of the binder 132 in the insulating layers 130 was set to 1.9% under condition 1. Under condition 1, the proportion of the solid content in the insulating layer slurry 1200 was set to 30%. The solid content includes the insulating materials 131, the binder 132, and the additive 133. Under condition 1, the viscosity of the insulating layer slurry 1200 was 325 mPa·s.

Under condition 2, unlike condition 1, the proportion of the solid content in the insulating layer slurry 1200 was set to 15%. That is, under condition 2, the proportion of the solvent in the insulating layer slurry 1200 was increased to be higher than that under condition 1. Under condition 2, the viscosity of the insulating layer slurry 1200 was 100 mPa·s.

Under condition 3, unlike condition 1, the proportion of the insulating materials in the insulating layers was set to 99.5%. Further, the proportion of the binder in the insulating layers was set to 0.4% under condition 3. That is, under condition 3, the proportion of the insulating materials in the insulating layers was increased to be higher than that under condition 1, and the proportion of the binder in the insulating layers was decreased to be lower than that under condition 1. Under condition 3, the viscosity of the insulating layer slurry was 100 mPa·s.

Under condition 4, unlike condition 1, the proportion of the insulating materials in the insulating layers was set to 90%. Further, the proportion of the binder in the insulating layers was set to 9.9% under condition 4. That is, under condition 4, the proportion of the insulating materials in the insulating layers was decreased to be lower than that under condition 1, and the proportion of the binder in the insulating layers was increased to be higher than that under condition 1. Under condition 4, the viscosity of the insulating layer slurry was 800 mPa·s or higher.

Under condition 5, unlike condition 1, the proportion of the solid content in the insulating layer slurry 1200 was set to 10%. That is, under condition 5, the proportion of the solvent in the insulating layer slurry 1200 was increased to be higher than those under conditions 1 and 2. Under condition 5, the viscosity of the insulating layer slurry 1200 was 3 mPa·s.

The insulating layers 130 under condition 1 were sufficiently bonded to the positive electrode active material layers 120. The insulating layers 130 under condition 1 had a very good interface with the positive electrode active material layers 120. That is, there is a relatively very small overlap between the insulating layers 130 under condition 1 and the positive electrode active material layers 120. The positive electrode 100 having the insulating layers 130 under condition 1 was able to suppress an increase in resistance.

The insulating layers 130 under condition 2 were sufficiently bonded to the positive electrode active material layers 120. The insulating layers 130 under condition 2 had a good interface with the positive electrode active material layers 120. That is, there is a relatively small overlap between the insulating layers 130 under condition 2 and the positive electrode active material layers 120. The positive electrode 100 having the insulating layers 130 under condition 2 was able to suppress an increase in resistance.

The insulating layers 130 under condition 3 were not sufficiently bonded to the positive electrode active material layers 120. The reason is that, under condition 3, the proportion of the insulating materials in the insulating layers was increased to be higher than that under condition 1, and the proportion of the binder in the insulating layers was decreased to be lower than that under condition 1. When the proportion of the binder is excessively low, it is difficult to bond the insulating layers to the positive electrode active material layers. The insulating layers 130 under condition 3 had a good interface with the positive electrode active material layers 120. The positive electrode 100 having the insulating layers 130 under condition 3 was able to suppress an increase in resistance.

The insulating layers 130 under condition 4 were sufficiently bonded to the positive electrode active material layers 120. The insulating layers 130 under condition 4 had a very good interface with the positive electrode active material layers 120. That is, there is a relatively very small overlap between the insulating layers 130 under condition 4 and the positive electrode active material layers 120. The positive electrode 100 having the insulating layers 130 under condition 4 was unable to suppress an increase in resistance. The reason is that, under condition 4, the proportion of the insulating materials in the insulating layers was decreased to be lower than that under condition 1, and the proportion of the binder in the insulating layers was increased to be higher than that under condition 1. The binder does not contribute to battery reaction.

The insulating layers 130 under condition 5 were not sufficiently bonded to the positive electrode active material layers 120. The insulating layers 130 under condition 5 did not have a good interface with the positive electrode active material layers 120. That is, there is a relatively large overlap between the insulating layers 130 under condition 5 and the positive electrode active material layers 120. The reason is that, under condition 5, the viscosity of the insulating layer slurry 1200 was extremely low (3 mPa·s). The positive electrode 100 having the insulating layers 130 under condition 5 was unable to suppress an increase in resistance.

### (Effects of Battery 1 including Positive Electrode 100 according to First Embodiment)

Effects of the battery 1 including the positive electrode 100 according to the first embodiment will now be described.
(1) (6) (7) The positive electrode 100 (electrode) has the insulating layers 130 (insulating layers). The insulating layers 130 are stacked on and bonded to the positive electrode active material layers 120 (active material layers), and contain the insulating materials 131 having insulating properties. The average particle diameter (D50) of the insulating materials 131 is 0.5 µm or more to 5.0 µm. The insulating layers 130 have a porosity of 25% or more but 70% or less. The insulating layers 130 and the positive electrode active material layers 120 overlap with each other by 0.001% or more but 30% or less in the stacking direction Z. The overlap between the insulating layers 130 and the positive electrode active material layers 120 is based on a volume ratio. The above-described configuration makes it possible to ensure that the overlap between the positive electrode active material layers 120, which contribute to battery reaction, and the insulating layers 130, which does not contribute to battery reaction, can be suppressed to a predetermined level or lower. Further, the above-described configuration allows the insulating layers 130 to be sufficiently impregnated with the electrolyte, and makes it possible to smoothly propagate the lithium ions. As a result, the positive electrode 100 in which an increase in internal resistance is suppressed can be obtained. Furthermore, the above-described configuration makes it possible to obtain the battery 1 including the positive electrode 100 in which an increase in internal resistance is suppressed.
(2) The insulating layers 130 and the positive electrode active material layers 120 are configured to overlap with each other by 1% or less in the stacking direction Z. Since such a configuration ensures that the overlap between the insulating layers 130 and the positive electrode active material layers 120 is suppressed to 1% or less, it is possible to obtain the positive electrode 100 in which an increase in internal resistance is further suppressed.
(3) The insulating layers 130 and the positive electrode active material layers 120 are configured to overlap with each other by 0.5% or less in the stacking direction Z. Since such a configuration ensures that the overlap between the insulating layers 130 and the positive electrode active material layers 120 is suppressed to 0.5% or less, it is possible to obtain the positive electrode 100 in which an increase in internal resistance is further suppressed.
(4) The insulating materials 131 are configured to include boehmite or alumina. Such a configuration allows the insulating materials 131 to be formed by a highly versatile material.
(5) The thickness of the insulating layers 130 is 1.0 µm or more but 10.0 µm or less in the stacking direction Z. Such a configuration ensures that the proportion of the insulation layers 130 in the positive electrode 100 can be suppressed to a predetermined level or lower. As a result, the energy density of the positive electrode 100 can be maintained at a predetermined level or higher.
(8) The insulating layers 130 face the negative electrode 200 in the stacking direction Z with the separator 300 (insulator) interposed therebetween. This configuration ensures that the insulation between the positive electrode 100 and the negative electrode 200 can be supplemented by the separator 300.

### (Battery according to Alternative Embodiments)

The battery provided by the present invention is not limited to the battery having the configuration described in conjunction with the foregoing embodiment. The battery provided by the present invention may be variously configured as appropriate within the scope defined by the appended claims.

The foregoing embodiment is described in detail or in brief to facilitate the understanding of the present invention. The battery provided by the present invention does not necessarily need to include all of the configurations described above, and may include configurations that are not depicted in the drawings. Further, some configurations of the foregoing embodiment may be partly deleted or replaced by or combined with configurations described in conjunction with an alternative embodiment.

In the electrode (positive electrode) provided by the present invention, the positive electrode active materials are not limited to nickel (Ni), cobalt (Co), and manganese (Mn)-based materials. For the present invention, the positive electrode active materials may be, for example, Fe (olivine iron)-based materials.

In the electrode (negative electrode) provided by the present invention, the negative electrode active materials are not limited to carbon-based materials. For the present invention, the negative electrode active materials may alternatively be, for example, silicon-based materials.

The battery provided by the present invention is not limited to a configuration in which the charge/discharge body is sealed with a container and a lid. The battery provided by the present invention may alternatively be configured such that the charge/discharge body is sealed with laminated film.

The battery provided by the present invention is not limited to a lithium-ion battery. The battery provided by the present invention may be applicable, for example, as a nickel-hydrogen battery.

The battery provided by the present invention is not limited to a secondary battery. The battery provided by the present invention may be applicable as a primary battery.

In the battery provided by the present invention, the charge/discharge body is not limited to a wound type that is formed by bundling and winding an elongate-shaped positive electrode, separator, and negative electrode. The charge/discharge body of the battery provided by the present invention may alternatively be configured as a stacked type that is formed by alternately stacking a rectangular-shaped positive electrode, separator, and negative electrode in a plurality of layers.

The charge/discharge body of the battery provided by the present invention may alternatively be configured as a stacked type that is formed by alternately disposing a plurality of relatively short-length positive electrodes in such a manner as to face a plurality of relatively short-length negative electrodes with an elongate-shaped separator interposed therebetween. In the charge/discharge body configured as described above, the positive electrodes and the negative electrodes face each other with the separator interposed therebetween when the separator is folded and stacked.

The charge/discharge body of the battery provided by the present invention is not limited to having a rectangular parallelepiped shape. The charge/discharge body of the battery provided by the present invention may alternatively be configured to have a cylindrical or columnar type.

The charge/discharge body of the battery provided by the present invention is not limited to a configuration in which a separator having insulating properties is disposed between the positive electrode and the negative electrode. The battery provided by the present invention can also be applied to a configuration in which an insulating layer is provided for at least one of the positive electrode and the negative electrode without the separator being disposed between the positive and negative electrodes. The configuration described above corresponds to what is generally called a separator-less configuration.

The battery provided by the present invention is not limited to a configuration in which only one charge/discharge body is provided. The battery provided by the present invention can also be applied to a configuration in which two or more charge/discharge bodies are provided.

The electrodes (positive and negative electrodes) provided by the present invention are not limited to a configuration in which the ends of the current collecting layers are bonded to the current collecting plates. The electrodes of the battery provided by the present invention may alternatively be configured such that an electrode tab, which protrudes outward from the edge of the current collecting layers, is bonded to the current collecting plates.

The electrodes (positive and negative electrodes) provided by the present invention are not limited to a configuration in which the active material layers are bonded to both sides of the current collecting layer. The electrodes may alternatively be configured such that the active material layers are bonded to only one side of the current collecting layer.

The method for manufacturing the electrodes (positive and negative electrodes) provided by the present invention is not limited to a configuration in which the active material layers and the insulating layers are formed by simultaneously applying and drying the active material layer slurry and the insulating layer slurry. The method for manufacturing the electrodes (positive and negative electrodes) provided by the present invention can also be applied to an alternative configuration in which the active material layers are first formed by applying the active material layer slurry to the current collecting layers and drying the applied active material layer slurry. When such an alternative configuration is adopted, the insulating layers are subsequently formed by applying the insulating layer slurry to the active material layers and drying the applied insulating layer slurry.

The method for manufacturing the electrodes (positive and negative electrodes) provided by the present invention is not limited to a configuration in which the first and second coating heads are independently disposed. The method for manufacturing the electrodes (positive and negative electrodes) provided by the present invention can also be applied to an alternative configuration in which the first and second coating heads are integrally formed.

### Description of Reference Characters

1: Battery
10: Charge/discharge body
50: Exterior body
51: Container
52: Lid
53: Liquid injection plug
54: Cleavage valve
60: External terminal
61: Positive terminal
62: Negative terminal
100: Positive electrode (electrode)
110: Positive electrode current collecting layer (current collecting layer)
110a: Positive electrode current collecting section
120: Positive electrode active material layer (active material layer)
121: Positive electrode active material (active material)
122: Positive electrode binder
123: Positive electrode conductive auxiliary agent
130: Insulating layer
131: Insulating material
132: Binder
133: Additive
200: Negative electrode
210: Negative electrode current collecting layer
210a: Negative electrode current collecting section
220: Negative electrode active material layer
221: Negative electrode active material
222: Negative electrode binder
223: Negative electrode conductive auxiliary agent
300: Separator (insulator)
1000: Manufacturing apparatus
1010: Transport section
1011: Transport roller
1020: Coating section
1021: First coating head
1022: First liquid supply pipe
1023: Second coating head
1024: Second liquid supply pipe
1030: Drying section
1031: Dryer
1040: Rolling section
1041: Rolling roller
1042: Driven roller
1100: Positive electrode active material layer slurry 1200: Insulating layer slurry
t1: Thickness (in stacking direction Z of positive electrode active material layer 120)
t2: Thickness (in stacking direction Z of insulating layer 130)
t3: Thickness (of part where region having thickness t1 and region having thickness t2 overlap in stacking direction Z)
X: Transverse direction (of positive electrode 100, negative electrode 200, and separator 300)
Y: Longitudinal direction (of positive electrode 100, negative electrode 200, and separator 300)
Z: Stacking direction (of positive electrode 100, negative electrode 200, and separator 300)
H: Transport direction (longitudinal direction Y) (of positive electrode 100, negative electrode 200, and separator 300)

## Claims

1. An electrode comprising:
a current collecting layer;
an active material layer that contains an active material and is stacked on and bonded to the current collecting layer; and
an insulating layer that contains an insulating material and is stacked on and bonded to the active material layer,
wherein the insulating material has an average particle diameter of 0.5 µm or more to 5.0 µm,
the insulating layer has a porosity of 25% or more but 70% or less, and
the insulating layer and the active material layer overlap with each other by 0.001% or more but 30% or less in a stacking direction.

2. The electrode according to claim 1,
wherein the insulating layer and the active material layer overlap with each other by 1% or less in the stacking direction.

3. The electrode according to claim 1,
wherein the insulating layer and the active material layer overlap with each other by 0.5% or less in the stacking direction.

4. The electrode according to claim 1,
wherein the insulating material includes boehmite or alumina.

5. The electrode according to claim 1,
wherein the insulating layer has a thickness of 1.0 µm or more but 10.0 µm or less in the stacking direction.

6. The electrode according to claim 1,
wherein the current collecting layer is a positive electrode current collecting layer, and
the active material layer is a positive electrode active material layer that contains a positive electrode active material.

7. A battery comprising:
a positive electrode; and
a negative electrode,
wherein at least one of the positive and negative electrodes includes
a current collecting layer,
an active material layer that contains an active material and is stacked on and bonded to the current collecting layer, and
an insulating layer that contains an insulating material and is stacked on and bonded to the active material layer,
the insulating material has a particle diameter of 0.5 µm or more to 5.0 µm,
the insulating layer has a porosity of 25% or more but 70% or less,
the insulating layer and the active material layer overlap with each other by 0.001% or more but 30% or less in a stacking direction, and
the insulating layer of the positive electrode faces the negative electrode in the stacking direction or the insulating layer of the negative electrode faces the positive electrode in the stacking direction.

8. The battery according to claim 7, further comprising:
an insulator that is disposed between the positive electrode and the negative electrode,
wherein the insulating layer of the positive electrode faces the negative electrode in the stacking direction with the insulator interposed therebetween or the insulating layer of the negative electrode faces the positive electrode in the stacking direction with the insulator interposed therebetween.
